Europäisches Patentamt

European Patent Office

Office européen des brevets

(11) Publication number: **0 006 299**
**A1**

(12) **EUROPEAN PATENT APPLICATION**

(21) Application number: **79300895.4**

(22) Date of filing: **21.05.79**

(51) Int. Cl.³: **A 01 G 9/10, C 01 B 33/00, C 05 G 3/00**

(30) Priority: 14.06.78 GB 2693678
14.06.78 GB 2693778
14.06.78 GB 2693878
14.06.78 GB 2693978
14.06.78 GB 2694178
14.06.78 GB 2694278
14.06.78 GB 2694378
14.06.78 GB 2694478

(43) Date of publication of application: **09.01.80**
**Bulletin 80/1**

(84) Designated Contracting States: **BE DE FR GB NL**

(71) Applicant: **FISONS LIMITED, Fison House 9 Grosvenor Street, London (GB)**

(72) Inventor: **Rainbow, Arnold, 19 Tintern Close, Ipswich Suffolk (GB)**

(74) Representative: **Dummett, Thomas Ian Peter (GB) et al, Fisons Limited, Fison House Princes Street, GB-Ipswich, Suffolk IP1 1QH (GB)**

(54) A method for growing plants, a plant growth propagating medium and plants growing therein.

(57) Aqueous gels are used as growth media for plants which have grown beyond the cotyledon stage. The plant may be a seedling which has been germinated on the gel and which is grown on to a size suitable for transplanting; or a cutting which is stuck in the gel. Alternatively, the gel can be formed around the root ball of a plant grown in another medium, so as to provide a gelled body around the roots to provide water to the plant during storage and transport of the plant.

0006299

The present invention relates to a process for growing plants.

Plants are conventionally grown in a growth medium such as soil or a peat compost. However, this method is cumbersome in that the growth medium has to be maintained moist. Also the medium is usually opaque and it is impossible to judge how the roots of the plant have developed. Furthermore, the composition of naturally occurring materials such as peat or soil varies and consistently reproducable agronomic results from a number of samples is difficult.

We have now devised a method for growing plants which is convenient and simple to operate and reduces the above problems.

The present invention provides a method for growing plants to beyond the cotyledon stage which comprises supporting the growth of the plant in an aqueous plant physiologically acceptable gel.

Whilst it has been proposed to use gels as a carrier medium for germinated seeds in transferring the seeds from the locus where they have been germinated (usually a piece of blotting paper) to the growth medium, e.g. peat or soil, where the germinated seeds are to grow on further, the gel has merely served as the carrier medium and it has hitherto been considered essential to provide a conventional growth medium for growing the seeds beyond the germination stage.

The use of a gel as the medium in which the plant is grown offers the advantage that the gel will usually provide all the fluid necessary to support growth of the plant without the need to add water throughout the growth period. This avoids the need to monitor the water content of the growing medium during initial growth. The gel will often be transparent and development of the root structure of the plant can be readily observed.

The gels for present use are characterised in that they contain a major proportion of water, typically at least 90% by weight, e.g. 95 to 99%, and are preferably thixotropic. Typically, the gel will contain from 0.5 to 10% by weight of gelling agent. Suitable gels for present use include silica gels; clay gels (e.g. those made using bentonite, fullers earth, smectite, hectorite, attapulgite clays and/or montmorillonite); natural gels (e.g. those made using cellulose derivatives, xanthans, polypeptides, saccharide polymers, alginates, gelatine or agar agar); synthetic organic gels (e.g. those made using cellulose derivatives or long chain glycols, notably those available under the trade name of Carbopol); and inorganic gels (e.g. those made using finely divided powders e.g. fume silica).

The gels for present use may be made up in any suitable manner, depending upon the type of gelling agent used. It is preferred that the gel be put up in a suitable form, e.g. in a small pot, in a tray or as a self-supporting cube or cylinder, for the growth of plants therein. The gel may incorporate plant nutrients dissolved in or dispersed in the gel or as a surface layer on the gel. Suitable plant nutrients include calcium, potassium and/or ammonium salts of nitric and/or phosphoric acids; potassium chloride; ammonium and/or potassium sulphates; urea and trace element salts or complexes. Typically such nutrients provide from 0.01 to 0.1% by weight each of N, $P_2O_5$ and $K_2O$ in the gel based on the total weight of the gel.

The plant nutrients for present use can be in slow release or delayed release form so that break down of the structure of the gel by the release of excess ions into the gel from the nutrients is reduced. It is preferred that the nutrients dissolve at a rate of less than 5%, e.g. 2 to 5%, by weight thereof into the gel over the first 24 hours in contact with the gel. This is conveniently achieved by providing the nutrients in the form of slow releasing compounds thereof, e.g. by providing the nitrogen in the form of polymers containing nitrogen, e.g. as urea/aldehyde condensates, or providing the phosphorus in the form of basic slag or a complex phosphate, e.g. as a condensed or polyphosphate glass or frit which may incorporate other nutrients, e.g. potassium salts. Alternatively, the slow or delayed release can be achieved by coating or encapsulating the nutrients. Thus, liquid or solid nutrient particles can be encapsulated in a polymer (e.g. an alkyd resin); or liquid nutrient can be held in capsules made from an osmotic membrane or a gel to release the nutrient into the surrounding gel. Alternatively, solid particles of nutrient can be given conventional coatings, e.g. with sulphur, a bitumen, an oil or wax or a polymer, to achieve the desired rate of release of nutrient into the gel. Typical nutrients suitable for encapsulation or coating include calcium, potassium and/or ammonium salts of nitric and/or phosphoric acids; potassium chloride; ammonium and/or potassium sulphates; urea and trace element salts or complexes.

Whether or not a given nutrient form is suitable for present use can be readily established by incorporating the nutrient into the gel and observing the gel over the period for which the gel is to be used. The gel may lose its gel form if excessive nutrient ions are released into it. The period over which the gel is to retain its gel form depends upon the use to be made of the gel. Thus, where a gel is used for striking cuttings over a 3 month period, the gel should be stable over at least this period. If desired, other materials, e.g. fungicides, pesticides, rooting hormones (e.g. auxins) may also be incorporated into the gel, e.g. dissolved in the gel or as a surface layer on the gel. Where the gel is to used to support cut flowers it is preferred that the gel contain fungicides, pesticides, bacteriocides and/or sugars. Suitable preservatives for present use include halogen donors, notably chlorine donors, e.g. chloro-cyanuric acids and salts thereof notably mono-sodium or potassium dichloroisocyanurate; hydroxy quinolines; sulphites; and silver or copper salts.

The surface layer on the gel can be a powder coating e.g. in a wax or oil carrier; or a separate gel/additive layer formed on the main bulk of the gel.

By providing the ingredient as a surface layer on the gel, the contact area between the gel and the ingredient is reduced. Also the ingredient layer often acts to reduce loss of water by evaporation from the surface of the gel. Where the ingredient is one which is to act in contact with the plant, e.g. is a rooting hormone, the provision of the surface layer ensures that as the plant is pushed into the gel for planting in the gel, the plant contacts the layer and carries some of the ingredient with it into the gel adjacent to the plant.

We believe that such gels having surface layer are novel and the invention therefore provides an aqueous gel having a surface layer containing an ingredient which aids or protects plant growth.

The surface layer on the gel is formed by any appropriate method, e.g. by dusting a powder onto the gel or by pouring a liquified wax or gel composition onto the gel and allowing it to set. If desired, the surface layer can be a composite layer of, for example, a wax layer on the gel separating the gel from a secondary gel/ingredient layer, with a second wax layer covering the exposed surface of the gel/ingredient layer.

In the process of the invention the plant is grown in a gel beyond the cotyledon stage, that is beyond the stage at which the cotyledons have fully expanded and contain chlorophyll. Preferably the plants have developed to beyond the first true leaf stage.

The plants to be grown on can thus be seedlings or mature plants and can be derived from a variety of sources. Thus, for example the plants for present use can be seedlings which have been germinated in the gel and which are not transplanted from the gel but are grown on in the gel to the desired maturity. Alternatively, the plants could be mature plants which are transplanted from some other locus, e.g. a nursery bed or pot. The gel in this case serves to support the plant during storage and/or transport of the plant, for example during display of the plant for sale or during mailing of the plant to a purchaser. The plant for present use may take the form of a cutting and we have found that the use of a gel offers particular advantages in striking cuttings which are subsequently transplanted from the gel to another growing locus.

The gels can also be used as a direct replacement for conventional plant growth media. Thus, for example, pots or other containers (e.g. growing bags or flower boxes) can be filled with gel and plants grown therein. Alternatively, the plants can be cut flowers and the gels allowed to set in a vase or other suitable container. The stems of the cut flowers are pushed into the gel which acts physically to support the stems and also provides water to the plants. If desired, the gel can contain suitable preservatives and nutrients (e.g. sugars) for the cut flowers.

The invention therefore also provides an aqueous gel enclosing therein roots or part of the stem of a plant which has developed to or beyond the cotyledon stage.

In growing plants on beyond the cotyledon stage, the use of gels offers the advantages that the gel provides a source of water to the plant over a period of time and provides a sterile growth medium. This reduces the need to monitor the growth and watering of plants as compared to conventional plant growth media.

Striking cuttings in the gel is achieved merely by inserting the stem of the cutting into the gel. The cutting is then propagated in the conventional way except that watering of the growth medium (the gel) is usually not required. The state of development of the roots of the cutting can usually be readily observed through the gel. It will usually be desired to provide the gel container with an opaque removable cover to reduce ingress of light to the roots. It will also usually be preferred to provide the gel container with a lid or other means for inhibiting loss of water from the container and thus reduce the risk of the gel drying out. For example, where individual pots for striking single cuttings are prepared for sale and storage, the pot can be given a sealing lid, e.g. a waxed paper or plastics lid sealed to the rim of the pot. This lid can be cut or perforated as appropriate to permit insertion of the cutting stem into the gel. Alternatively, where a number of cuttings are to be struck at a time, the gel can be formed in a

08/A/153

0006299

tray into which the cuttings are inserted. The whole is then covered with a plastics sheet which acts to conserve moisture and heat. If desired the surface of the gel can be given a wax or other impervious coating (e.g. a dark plastics film) to reduce water loss and/or light ingress.

When the root system of the cutting has developed to a suitable extent the cutting can be transplanted. Alternatively, where the pot is big enough, the struck cutting in its pot can be sold or stored in its pot for subsequent further growth at another site before transplanting. At transplanting either the cutting is removed from the gel or the cutting with its gel is removed as a whole from the pot or other container. The use of a gel as the striking medium has the advantage that the roots of the cutting can be withdrawn from the medium with little or no damage even where roots of individual cuttings have become entangled. Furthermore, the gel remaining on the roots reduces any check in growth which occurs on transplanting. If desired rooted cuttings can be replanted in the gel if not ready for immediate use merely by inserting the cutting into the gel. A further advantage of the use of gels for striking cuttings is that the gel provides a source of water during a period of transport and/or storage when the cuttings are inaccessable, e.g. during postage from a mail order supply centre. Thus trays of struck cuttings can be put up in display or other packaging for sale, transport or storage and may be left unattended for prolonged periods.

The gels can also be used to provide a growing medium surrounding plant roots during transport and/or storage of the plants. The gel provides part or all of the water to sustain the plants and minimises the check in growth of the plant.

The invention therefore also provides a method for transporting and/or storing plants which have grown to at least the cotyledon stage characterised in that the roots of the plant are enclosed in an aqueous gel.

For the storage and/or transport of plants, the plant roots are enclosed in the gel. This is conveniently done by allowing the gel to set around the plant roots e.g. in a suitable container. The plants may be selected from a wide range and may be seedlings, immature or mature plants or shrubs or young trees.

Whilst the gels for present use may contain plant nutrients, the nutrients may in some cases cause the gel to lose its gelled form. Surprisingly, we have found that nutrient solution can be applied to a gel, which has cracked or fissured due to the loss of water therefrom, without significant destruction of the gel form of the gel.

Accordingly, the present invention provides a process for incorporating nutrient in an aqueous gel which process comprises applying an aqueous solution of the nutrient to fissures formed in the gel.

The fissures in the gel are typically formed by partial dehydration of the gel, e.g. by evaporation or by transpiration by a plant growing on the surface of the gel and/or with its root system within the gel. The process of the invention may be applied at any time after the first fissures have appeared in the gel, but is of especial use when the fissures are widespread throughout the gel. Thus, typically the process of the invention finds use when the gel has lost from 20 to 75% of the water initially present in the gel.

The nutrients are applied to the fissured gel as a suspension or solution thereof which percolates through the fissures in the gel. The solution typically contains calcium, potassium and/or ammonium salts of nitric and/or phosphoric acids; potassium chloride; ammonium, magnesium and/or potassium sulphates; urea and trace element salts or complexes. Typically, such nutrients provide from 0.1 to 10% by weight each of N, $P_2O_5$ and $K_2O$ in the solution based on the total weight of the solution. If desired, other materials, e.g. fungicides, pesticides, rooting hormones (e.g. auxins) may also be incorporated into the solution. The solution can be applied to the gel by any suitable means, e.g. by watering can, spray line or trickle feed line. The application may be continuous or intermittent, optionally alternating with application of water rather than nutrient.

The invention will now be illustrated by the following Examples in which all parts and percentages are given by weight unless stated otherwise.

Example 1

A thixotropic gel was prepared from 3 parts of a montmorillonite gelling agent and 100 parts of water. The gel was allowed to set in a seed tray. Seeds of cucumbers were scattered on the surface of the gel and allowed to germinate. The gel provided the necessary water to achieve germination and it was not necessary to monitor the addition of water as is required when moist paper is used as a germination medium.

The germinated seeds were left on the gel to grow on into seedlings and not transferred to other loci as would normally have been done. Some of the seedlings were pricked out at the cotyledon stage for growing on elsewhere. Removal of the seedlings from the gel was achieved without any significant root damage and since the roots carried some gel on them, the seedlings readily re-established growth at the new loci. The seedlings remaining in the tray were grown on to provide plants with some 4 to 5 true leaves. During this period the gel provided much of the water required for the plant growth. A foliar feed was applied to provide nutrients to some of the plants. In other samples, a solution of plant nutrients was poured onto the gel and allowed to percolate into the gel through cracks which had appeared in the gel as it dried out.

The plants were transferred to their final growing loci by cutting a section of the gel block from the tray and planting the block at the locus. The gel block provided a reservoir of water which aided establishment of the plant at its new locus without impeding free development of the root system into the surrounding growth medium.

Example 2

A gel is prepared as in Example 1 and is poured around the bare roots of an established rose plant which had been dug up for sale at a nursery. The gel is contained in a suitable sized pot and, when set, provides a secure mounting for the rose. The rose can then be stored or transported in the pot for some days without significant deterioration. At the point of replanting the gel block encasing the rose roots is removed from the pot and the block with the rose then planted. The gel again provides a reservoir of water and aids re-establishment of the rose.

Example 3

A gel was prepared as in Example 1 and allowed to set in individual 50 to 100 ml capacity tubs. A variety of cuttings were struck in the tubs. In some cases the cuttings were dipped in a rooting hormone powder. In other cases the hormone powder was dusted onto the surface of the gel.

The gels provided a medium in which root development could be readily seen and from which the rooted cuttings could be readily removed for transplanting. Alternatively, the cuttings in their tubs could be stored and transported as in Example 2.

13/A/87

0006299

### Claims

1.   A plant which has grown to beyond the cotyledon stage and which has its roots or part of its stem supported in a plant physiologically acceptable aqueous gel.

2.   A method for growing plants to beyond the cotyledon stage which comprises supporting the growth of the plant in a plant physiologically acceptable aqueous gel.

3.   A method as claimed in claim 2 wherein seeds are germinated on the gel and the subsequent seedlings are grown on in the gel.

4.   A method as claimed in claim 2 which comprises inserting a cutting from a plant into a plant physiologically acceptable aqueous gel.

5.   A method as claimed in claim 2 which comprises removing the plant from another growth medium and enveloping its roots in the gel for storage and/or transport.

6.   A method as claimed in any one of claims 2 to 5 wherein a nutrient is provided to the plant by applying an aqueous solution of nutrient to fissures formed by partial dehydration of the gel.

7.   A plant physiologically acceptable aqueous gel suitable for use in supporting a plant which has grown to beyond the cotyledon stage which gel has a surface layer containing an ingredient which aids or protects plant growth.

8.   A gel as claimed in claim 7 wherein the surface layer acts to reduce loss of water from the gel by evaporation.

9.   A gel as claimed in claim 8 wherein the surface layer contains a plant nutrient.

10.    A plant, method or gel as claimed in any one of the preceding claims wherein the gel incorporates a plant nutrient.

| | **DOCUMENTS CONSIDERED TO BE RELEVANT** | | **CLASSIFICATION OF THE APPLICATION (Int. Cl.²)** |
|---|---|---|---|
| Category | Citation of document with indication, where appropriate, of relevant passages | Relevant to claim | |
| X | RESEARCH DISCLOSURE, no.147, July 1976, Hampshire, "Seed germination media", page 45. | 1,2 | A 01 G 9/10 C 01 B 33/00 C 05 G 3/00 |
| X | US - A - 3 973 355 (McKENZIE) <br> * column 4, lines 27-43; column 10, line 61 to column 11, line 18; column 13, lines 34-48; column 14, line 50 to column 15, line 24; figures 1,2 * | 1-4,10 | **TECHNICAL FIELDS SEARCHED (Int.Cl.²)** <br> A 01 G <br> A 01 C <br> B 65 D |
| X | GB - A - 1 399 822 (FINCH) <br> * Page 2, line 57 to page 3, line 90; page 5, lines 27-127 * | 1-5, 7,10 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 12-09-1979 | HERIJGERS |

EPO Form 1503.1 06.78